# EUROPEAN PATENT APPLICATION

(11) **EP 2 852 204 A1**
(43) Date of publication of application: **25.03.2015**
(21) Application number: 13306285.1
(22) Date of filing: 20.09.2013
(51) Int. Cl.: H04W 16/18, H04W 24/02

(54) **Methods and computer programs for determining information related to a performance of a base station transceiver**

(71) Applicant: ALCATEL LUCENT, 92100 Boulogne-Billancourt (FR)
(72) Inventor: Dr. Kühn, Edgar, 70435 Stuttgart (DE); Dr. Karla, Ingo, 70435 Stuttgart (DE)
(74) Representative: 2SPL Patentanwälte PartG mbB

(57) **Abstract**

Embodiments relate to methods and computer programs for determining information related to a performance of a base station transceiver at one place or a plurality of differing places. The method for determining information related to a performance of a base station transceiver at a plurality of differing places in a communication network comprises activating (10) the base station transceiver at the plurality of differing places. The method further comprises configuring (12) a mobile transceiver with measurement information. The measurement information indicates to measure radio signals of the base station transceiver and to store measurement data. The measurement data comprises information related to measurement results and location information related to where the measurement results were obtained. The method further comprises signaling (14) to the mobile transceiver instructional information. The instructional information indicates to provide information related to the measurement data and receiving (16) information related to the measurement data from the mobile transceiver. The method comprises determining (18) the information related to the performance of the base station transceiver at the plurality of differing places based on the information related to the measurement data. A method for determining information related to a performance of a dummy base station transceiver in a communication network comprises configuring (22) a mobile transceiver with measurement information and receiving (24) information related to the measurement data from the mobile transceiver. The method further comprises determining (26) the information related to the performance of the dummy base station transceiver based on the information related to the measurement data.

## Description

### Technical Field

Embodiments relate to methods and computer programs for determining information related to a performance of a base station transceiver at one place or at a plurality of differing places, and more particularly, but not exclusively to determining a location for a new base station transceiver in a communication network by determining information related to the performance of the base station transceiver at the one place or at the plurality of differing places.

### Background

This section introduces aspects that may be helpful in facilitating a better understanding of the inventions. Accordingly, the statements of this section are to be read in this light and are not to be understood as admissions about what is in the prior art or what is not in the prior art.

Cellular wireless communication systems are based on a plurality of cellular coverage areas, which are generated by interconnected base station transceivers. Mobile transceivers consume wireless services provided by a network and may move through the cellular structure. Mobile transceivers carry out measurements on radio signals transmitted by the base station transceivers based on which the mobile transceivers are assigned to the cells of the network, handed over between the cells of the network, respectively. The size of a cell and the number of mobile transceivers, which can be served, may depend on the strength or quality of the respective radio signals. The capacity of each cell, in terms of data rate or number of mobile transceivers, which can be served, depends on system parameters and specifications, such as bandwidth, maximum or minimum data rates per mobile transceiver, etc. The traffic demand on the other side depends on the density of the mobile transceivers, e.g. in a downtown area the density of mobile transceivers may be higher than in a rural area. The traffic demand may also depend on other factors, such as business and rush hours, occurrence of events like mass events, characteristics of traffic demands, service mix, etc.

Additional base station transceiver or cell deployment may enhance the capacity of a cellular network.

### Summary of illustrative Embodiments

Various embodiments provide a method and a computer program operable to determine information related to a performance of a base station transceiver at a plurality of differing places in a communication network. Embodiments may make use of mobile transceivers, which carry out measurements on signals of a base station transceiver and store information related to the measurements and information related to a location where these measurements were carried out. In some embodiments, while placing a base station transceiver to places of interest in a communication network, mobile transceivers may be configured to carry out measurements. The information related to these measurements may be obtained from the mobile transceivers and used for determining performance information of the base station transceiver at the differing places.

Embodiments provide a method for determining information related to a performance of a base station transceiver at a plurality of differing places in a communication network. The method comprises activating the base station transceiver at the plurality of differing places. The method further comprises configuring a mobile transceiver with measurement information, which may then carry out measurements based on the measurement information. The measurement information indicates to measure radio signals of the base station transceiver and to store measurement data. The measurement data comprises information related to measurement results and location information related to where the measurement results were obtained. The method further comprises signaling to the mobile transceiver instructional information. The instructional information indicates to provide information related to the measurement data. The method further comprises receiving information related to the measurement data from the mobile transceiver and determining the information related to the performance of the base station transceiver at the plurality of differing places based on the information related to the measurement data.

Embodiments may enable a utilization of mobile transceivers as sensors for collecting performance data of the base station transceiver. The base station transceiver may be activated or placed at differing locations in the communication network. The measurement data may then be collected from the mobile transceivers and the measurement data may be used to determine performance measures of the base station transceiver at differing locations, for example, a coverage of the base station transceiver may be evaluated. The determining of the performance data of the base station transceiver at the differing locations may be efficient as mobile transceivers are used for the measurements, information on results of which are stored together with related location information.

In further embodiments the base station transceiver may correspond to a dummy base station, which is inoperable to transmit payload data. Embodiments may enable cost efficient determination of the performance data by using the dummy base station transceiver, which has limited operability or functionality compared to a regular base station transceiver. Embodiments may enable reduction of further cost and network integration efforts by using the dummy base station and configuring a mobile transceiver with the measurement information.

Embodiments provide a method for determining information related to a performance of a dummy base station transceiver in a communication network. The dummy base station transceiver is inoperable to transmit payload data. The method comprises configuring a mobile transceiver with measurement information. The measurement information indicates to measure radio signals of the dummy base station transceiver and to store measurement data. The measurement data comprises information related to measurement results and location information related to where the measurement results were obtained. The method further comprises receiving information related to the measurement data from the mobile transceiver, and determining the information related to the performance of the dummy base station transceiver based on the information related to the measurement data.

A dummy base station transceiver, as a variant of a base station transceiver, may be used in embodiments together with measurement configurations, which also provide location information on where the measurements have been taken. Embodiments may allow determining coverage of the dummy base station transceiver and coverage holes of the dummy base station transceiver and other base station transceivers. In some embodiments performance of a dummy base station transceiver may be obtained for a single place without changing the location of the dummy base station transceiver.

In some embodiments the method further comprises activating the dummy base station transceiver at a plurality of differing places, in line with the above description for the base station transceiver. The method may further comprise signaling to the mobile transceiver instructional information. The instructional information indicates to provide information related to the measurement data. The method may further comprise determining the information related to the performance of the dummy base station transceiver at the plurality of differing places based on the information related to the measurement data.

In some embodiments the base station transceiver may further correspond to a small cell base station transceiver, which generates a coverage area, which is at least partly surrounded by a coverage area of a macro cell base station transceiver. Furthermore, in some embodiments the base station transceiver may be placed in an area without coverage of another radio cell or another base station transceiver. Embodiments may enable cost-efficient determination or evaluation of promising locations within the coverage area of a macro cell by using the above method to obtain performance related information of a small cell base station transceiver at the differing locations.

In further embodiments the method may comprise determining the information related to the performance of the base station transceiver at one or at the plurality of differing places based on analyzing the measurement results with respect to a signal quality provided by the base station transceiver at the one or at the plurality of differing places and a number of mobile transceivers statistically located in coverage areas of the base station transceiver at the one or at the plurality of differing places. The coverage area of the base station transceiver corresponds to an area in which radio signals transmitted by the base station transceiver are receivable at a mobile transceiver at least with a predefined signal quality. Embodiments may enable an efficient method to obtain information related to a coverage of the base station transceiver if it was permanently deployed at one or each of the plurality of differing places. Moreover, in some embodiments a number of measurements obtained during a certain time interval may provide information related to how many mobile transceivers are statistically located in these coverage areas, and information related to a traffic and data rate demand within such areas, respectively. Embodiments may enable efficient identification of promising locations for the base station transceiver by using a plurality of mobile transceivers representing a distribution, such as, for example, a statistical, a spatial or a temporal distribution, of mobile transceivers in the network, a statistical, a spatial or a temporal distribution of a traffic demand, respectively.

In some embodiments the measurement information indicates to carry out measurements in an inactive state of the mobile transceiver. The inactive state is a state in which no payload data transmission is carried out. In other words, some embodiments may configure mobile transceivers to carry out the above measurements, even if these mobile transceivers do not have an active payload data transmission. Embodiments may enable more measurement data as inactive mobile transceivers may be configured to carry out the measurements. Further embodiments may also use active state mobile transceivers. The active state is a state in which payload data transmission is carried out with the mobile transceiver. In other words, in some embodiments active and inactive state mobile transceivers may be used to obtain the measurements. Embodiments may enable to obtain the performance data for a location of the base station transceiver efficiently.

In further embodiments the method may further comprise storing an indication in the measurement data when a signal quality of the radio signals of the base station transceiver undergoes a quality threshold at the location. Embodiments may therefore also enable a detection of coverage holes of the base station transceiver. In further embodiments such an indication may also be obtained to first identify locations in the coverage of a deployed cell, e.g. a macro cell, at which another base station transceiver, e.g. a small cell, could potentially be deployed. The indications may then serve to identify further locations, where additional base station transceivers could be deployed.

Embodiments further provide a computer program having a program code for performing one or more of the above described methods or a program code for performing tasks supporting one or more of the above described methods, when the computer program is executed on a computer or processor. A further embodiment is a computer readable storage medium storing instructions which, when executed by a computer, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which
Fig. 1 illustrates a block diagram of a flow chart of an embodiment of a method for determining information related to a performance of a base station transceiver;
Fig. 2 illustrates a block diagram of a flow chart of an embodiment of a method for determining information related to a performance of a dummy base station transceiver; and
Fig. 3 illustrates a heterogeneous network in an embodiment.

### Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following some embodiments of methods for base station transceivers will be described. These base station transceivers may be part of a cellular or mobile communication system. In mobile communication networks heterogeneous architectures may be used. Heterogeneous Networks (HetNets) are networks, which utilize cell types of different sizes, as, for example, macro cells and small cells, such as metro cells, micro or pico cells, and femto cells. Such cells are established by base station transceivers for which their coverage areas are determined by their transmission power and interference condition. Small cells are cells having a smaller coverage area than macro cells. In some network scenarios the small cells' coverage area can be surrounded by the coverage area of a macro cell. Small cells may be deployed to extend the capacity of a network.

The methods or computer programs in embodiments may be adapted to or configured for a mobile communication system, which may, for example, correspond to one of the 3GPP-standardized mobile communication networks, where the term mobile communication system is used synonymously to mobile communication network. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver may be operable to communicate with one or more active mobile transceivers and the base station transceiver may be located in or adjacent to a coverage area of another base station transceiver, e.g. a macro cell base station transceiver or a Closed Subscriber Group (CSG) base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, a laptop, a notebook, a personal computer, a Personal Digital Assistant (PDA), a Universal Serial Bus (USB) -stick, a car, etc. A mobile transceiver may also be referred to as User Equipment (UE) or mobile in line with the 3 GPP termino lo gy.

A base station transceiver can be located in the fixed or stationary part of the network or system. In some embodiments a base station transceiver may be mobile, e.g. when attached to a vehicle, such as a train, bus, plane, etc. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base transceiver Station (BTS), an access point, a transmission point etc., which may be further subdivided in a remote unit and a central unit.

A mobile transceiver can be associated with the base station transceiver or cell. The term cell refers to a coverage area of radio services provided by a base station transceiver, e.g. a NodeB, an eNodeB, a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates. The terms cell, sector and base station transceiver may be used synonymously.

In other words, in embodiments the mobile communication system may correspond to a HetNet, which utilizes different cell types, i.e. CSG and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station transceivers for which their coverage areas are determined by their transmission power and interference condition. In some embodiments a small cell's coverage area can be at least partly surrounded by the coverage area of a macro cell established by another base station transceiver. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below a 100m. A femto cell may be the smallest cell and it may be used to cover a household or a gate section at an airport, i.e. its coverage area may have a diameter below 50m. Thus, a base station transceiver may also be referred to as cell.

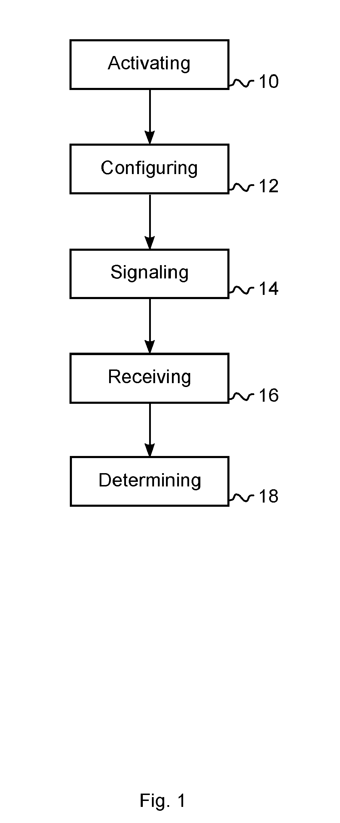

Fig. 1 illustrates a block diagram of a flow chart of an embodiment of a method for determining information related to a performance of a base station transceiver at the plurality of differing places in a communication network. As illustrated in Fig. 1 the method comprises activating 10 the base station transceiver at the plurality of differing places. Such activation may correspond to switching-on the base station transceiver at a first place or location for a time period and then switching-off the base station transceiver. The activating may comprise moving the base station transceiver to a second place or location. The activation may comprise switching-on the base station transceiver at a second place or location for a time period and then switching-off the base station transceiver.

In some embodiments multiple base station transceivers may be used at the differing places and the activating may comprises activating each of the base station transceivers at the differing places subsequently. The multiple base station transceivers may be activated in sequence, such at a given time only one of the base station transceivers is activated. In other embodiments, e.g. when the coverage areas of the base station transceivers at the differing places are non-overlapping or when their coexistent signals would not influence the measurements of the mobile transceivers, multiple base station transceivers may be activated at the same time. The activation or switching of the one or more base station transceivers may be carried out manually, e.g. by a deployment crew, it may be carried out automatically, e.g. by means of a signal. Such a signal may be generated locally in a base station transceiver, e.g. by means of a preset timer, or it may be provided remotely, e.g. via an accordingly adapted signal.

For example, the base station transceiver may be coupled with a mobile transceiver, which may be used to remote control the base station transceiver. Such mobile transceiver may operate on the same or a different frequency as the base station transceiver, it may be operated by the same or different operator, it may use the same or a different access technology, e.g. it may use a satellite based communication system to enable activation of the base station transceiver in a coverage hole of a terrestrial communication system. For example, a 2G or 2,5G (e.g. GSM, GPRS, EDGE, GERAN or enhanced GERAN) network may provide an overall coverage while a 3G or later generation network (e.g. UMTS, LTE, LTE-A, UTRAN, eUTRAN) may still have coverage holes. In such a scenario an embodiment may use the 2G or 2,5G network so switch the base station transceiver on and off, e.g. by means of Short Message Service (SMS). In some embodiments, multiple base station transceivers may be switched-on and -off using such remote signals. Remote signals may be generated using a central entity, e.g. a computer, coordinating the method.

The method further comprises configuring 12 a mobile transceiver with measurement information. The measurement information indicates to measure radio signals of the base station transceiver and to store measurement data. The measurement information may also indicate to measure radio signals of neighbor cells or even information of other mobile radio networks. Such a configuration may be carried out by a base station transceiver a mobile transceiver is associated with or connected to. For example, in an LTE or a UMTS network such a configuration may be carried out by means of Radio Resource Control (RRC) or other control signaling. The configuration may as well be triggered or coordinated by a central entity, such as a computer.

The measurement data comprises information related to measurement results and location information related to where the measurement results were obtained. The method further comprises signaling 14 to the mobile transceiver instructional information. The instructional information indicates to provide information related to the measurement data. Such instructional information may also be provided by a base station transceiver, e.g. by means of RRC or other control signaling. A trigger for such instructional information may be provided by a central entity, such as a computer or a network node. The method further comprises receiving 16 information related to the measurement data from the mobile transceiver. For example, a mobile transceiver may report such information on measurement data to a base station transceiver it is connected to or associated with or to another network node, e.g. by means of RRC or other control signaling.

The method further comprises determining 18 the information related to the performance of the base station transceiver at the plurality of differing places based on the information related to the measurement data. In embodiments the above method may be used to determine a promising or even an optimal position to deploy a cell, e.g. a small cell, among a number of possible or suited installation locations, which may be limited. As pointed out above, in some embodiments the base station transceiver may generate a small cell, in other embodiments it may generate any arbitrary cell. In some embodiments, the cell size of a small cell may be fit to the areas of critical performance of an overlaying macro cell. For example, the above method may be used to identify such a location among multiple candidate locations.

In some embodiments the base station transceiver may correspond to a dummy base station, which is inoperable to transmit payload data. That is to say that some embodiments may make use of a dummy base station transceiver, to which it may also be referred to as fake, or pseudo base station transceiver. Such a base station transceiver may have limited functionality or operability. In some embodiments the purpose of the dummy base station transceiver may be to enable mobile transceivers to measure signals from the base station transceiver, but it may not serve the mobile transceivers in terms of payload data transmission or reception. As such, the dummy base station transceiver may comprise a transmitter module which may correspond to one or more transmitter devices, one or more transmitter units, or any means for transmitting. The transmitter module may therefore comprise typical transmitter or transceiver components, such as one or more antennas, filter or filter circuitry, an amplifier such as a Power Amplifier (PA), conversion circuitry for converting a base bend signal to a Radio Frequency (RF) signals, an analogue/digital converter, or signal processing capability such as a Digital Signal Processor (DSP).

In some embodiments the transmitter module may be operable to transmit at least one control signal, such as a reference or pilot signal, to enable a mobile transceiver to carry out signal quality measurements on the reference signal. The transceiver module may further be operable to transmit a signal with information related to an identification of the cell generated by the base station transceiver, such that the cell can be identified or determined by the mobile transceivers. For example, the transceiver module may be operable to transmit synchronization channels or signals to enable a mobile transceiver to synchronize to the signals transmitted by the base station transceiver. In some embodiments the transceiver module may be operable to transmit at least some system information to enable the mobile transceiver to identify the base station transceiver, its cell respectively, and to carry out the respective measurements.

In some embodiments the transceiver module may transmit just enough information for a mobile transceiver to carry out measurements on the respective signals. In an embodiment the respective method may therefore comprise transmitting information related to an identification of a cell generated by the base station transceiver from the base station transceiver. The method may further comprise transmitting a reference signal from the base station transceiver, which can then be measured or received by mobile transceivers. In some embodiments such a base station transceiver may even be battery powered and it may not have a backhaul connection to the communication network. That is to say that the base station transceiver may be very cost-efficient and may just be placed in a location, which is a potential location for permanent deployment, and then switched on or activated according to the above method. Since a dummy base station transceiver may be battery powered it may not need any further connections or coupling to other components. Therefore embodiments may enable to save installation costs during the procedure of evaluating differing locations.

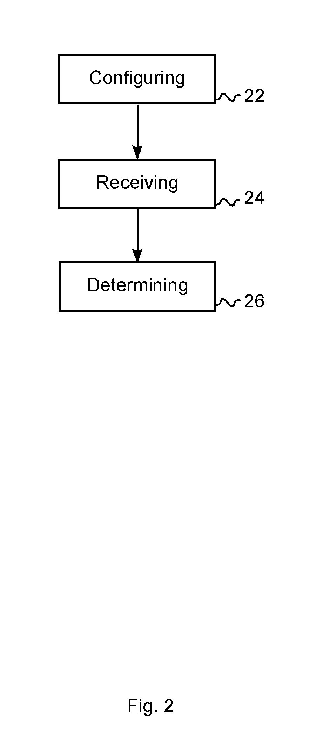

Fig. 2 illustrates a block diagram of a flow chart of an embodiment of a method for determining information related to a performance of a dummy base station transceiver in a communication network. The dummy base station transceiver is inoperable to transmit payload data. The method comprises configuring 22 a mobile transceiver with measurement information. The measurement information indicates to measure radio signals of the dummy base station transceiver and to store measurement data. The measurement data comprises information related to measurement results and location information related to where the measurement results were obtained. The method further comprises receiving 24 information related to the measurement data from the mobile transceiver. The method further comprises determining 26 the information related to the performance of the dummy base station transceiver 100 based on the information related to the measurement data.

In some embodiments a dummy base station transceiver may be used in a single place and mobile transceivers may be configured with according measurement information. The measurement data and in particular the location information therein may allow determining the coverage and coverage holes of the dummy base station transceiver. The information about the performance of the dummy base station transceiver may then be used to evaluate the location of the dummy base station transceiver for permanent deployment of a fully operable base station transceiver, for example, a small cell base station transceiver.

In other words a dummy base station may be located at one or more possible places or locations of deployment. Some embodiments may provide the ability to resolve local macro cell performance issues, which may be evaluated with a much higher accuracy as compared to using computer simulations or planning tools, drive tests, respectively. In some embodiments the coverage area of a dummy base station may correspond to the coverage area of a small cell or base station transceiver, which may possibly be installed later at the same location. Embodiments may avoid or reduce installation costs during location testing, because, in an example of an LTE network, X2 and S1 connections may not be needed and installations costs may be saved.

In some embodiments the method may be used to identify suited small cell or any cell locations for resolving high traffic demands in hot spot areas. The method may further allow to discover coverage holes or locations suffering from bad signal quality conditions, such as one or more elements of the group of low Signal-to-Noise-Ratio (SNR), low Signal-to-Interference-and-Noise-Ratio (SINR), low Receive Signal Code Power (RSCP), low Receive Signal Strength Indicator (RSSI) etc. That is to say, mobile transceivers may be configured to take measurements on radio signals while moving to the network. Mobile transceivers may not be restricted to measurements for handover purposes, i.e. when having active data connections. As will be detailed subsequently, mobiles in any states may be used to take these measurements. Mobiles may therefore also measure and report later on, if the signal quality was bad, for example below a certain threshold. This may be enabled by configuring the mobile transceivers to store measurement results together with the location information on where these results were achieved. Even if a mobile does not have an active data connection, such results may be obtained at a later point of time, when the mobile transceiver has re-established data connection. Embodiments may therefore not rely only on connected mode mobile transceivers, and therefore achieve low measurement times and high measurement volumes or amounts. Embodiments my therefore provide measurement times, which are considerably large to assure stable measurement statistics using a sufficiently high number of available mobile transceivers.

In embodiments the method for the dummy base station transceiver may further comprise activating the dummy base station transceiver at a plurality of differing places. Instructional information may be signalled to the mobile transceiver. The instructional information may indicate to provide information related to the measurement data. The method may further comprise determining the information related to the performance of the dummy base station transceiver at the plurality of differing places based on the information related to the measurement data.

Embodiments may extend the evaluation possibilities of an envisaged installation location with coverage issues. Embodiments may enable evaluation possibilities even in multi-vendor wireless networks. Embodiments may be used in heterogeneous networks, i.e. networks comprising cells of different sizes. Embodiments may identify and resolve the issues around coverage holes, for example, measurements of these areas or areas around the coverage hole may be enabled. Embodiments may further enable to obtain measurement information and knowledge from multiple networks of multiple operators, where such information may not be available for competing operators. Embodiments may enable an identification of a good, promising, best-suited, even optimal, location for placing a new base station, for example for a small cell, in some embodiments even within an area of a network from another vendor. Embodiments may enable to investigate SINR-problems, for example, by obtaining information from mobile transceivers on coverage holes may be obtained. Embodiments may further provide additional configuration information for a new cell to be installed, by using detailed or more detailed mobile terminal measurements.

In embodiments a dummy base station may temporary be placed at a potential location without a need for a full and costly installation including S1 and X2 interfaces. The dummy base station may only emit or transmit pilot signals. Some currently active mobile terminals or mobile transceivers may detect the dummy base station as their strongest radio signal choice and initiate a handover. Embodiments may enhance this concept by also using idle mode mobile transceivers as will be detailed subsequently. The handover request may then be rejected, but the attempt of this mobile may be recorded for later analysis of the suitability of this dummy base station location. Embodiments may enable to use information from currently active mobiles, for example, by monitoring a measurement report in order to actually initiate a handover to the dummy cell from these mobile transceivers. In some embodiments, immediate reporting of such measurement data may be used. In other words, an active-state mobile transceiver may report measurement data immediately after the measurements have been taken, where the term "immediate" is to be interpreted in line with given system, protocol and signaling specifications.

By using also inactive mobile transceivers additional information may be provided. This additional information may also comprise direct measurement information, such as, for example, which neighboring base stations are detected and with which signal strength. Moreover, while handover measurements or initiated handovers may generate signaling and processing load, using idle mode mobiles to carry out the measurements allows for controlling the reporting of the measurements such that an according signaling load can also be controlled. Embodiments may therefore reduce a handover attempt and rejection overhead as well as signaling overhead generated by the mobiles initiating the handover request.

In some embodiments it can be assumed that there are only few mobiles actually active and initiating a handover while there are a lot more mobiles inactive or idle. Embodiments may therefore enable to obtain more information or to shorten the measurement periods. Embodiments may involve more mobile terminals in the measurement procedure as idle and active mobiles may be utilized. Moreover, utilizing inactive mobile transceivers may enable to get information or to take measurements at locations, where mobile terminals are not about to initiate a handover.

Embodiments my further allow getting the measurements or measurement results quicker, as more mobile transceivers may utilized for these measurements. This may shorten the whole procedure, especially when several different candidate base station locations are to be tested one after the other. Embodiments may further enable to obtain information with respect to coverage holes, for example indoors. In a coverage hole there may not be any active connection to any base station from any mobile transceiver, so none of the mobile transceivers would report any handover measurements in case of a placed dummy base station. Embodiments may therefore enable measurements, which combine the location accuracy of the dummy base station transceiver with mobile terminal measurement reporting, also for the case that the mobile terminal is in a coverage hole. In some embodiments utilization of inactive mode mobile transceivers may provide further or additional information, which may not be obtained from active mode mobile transceivers. In the active mode, information on when a mobile terminal actually attempts to initiate a hand over may be obtained and information on to which particular target cell the hand over is requested. Inactive mode measurements may allow obtaining signal strength measurements of all cells, which are detected.

Embodiments may combine using a dummy base station transceiver with according measurement configurations at the mobile transceivers. Radio link quality information may be obtained directly from the mobile transceiver measurements. Embodiments of the above described methods may allow gathering mobile terminal measurements based signal strength information about a cell the mobile transceiver is located in, for example, a macro cell, about the strongest neighbor cell, and the base station to be investigated, for example, a dummy base station. Moreover, embodiments may enable to obtain information about an interference situation a mobile terminal experiences at differing locations, especially in presence or absence of the respective base station transceiver, dummy base station transceiver, respectively.

Such a method may also work in a multi-vendor environment. In some embodiments, for example, Minimization-of-Drive-Test (MDT) measurements or tools thereof may be used to obtain the respective information related to measurement results or measurement data. In other words, embodiments may use MDT or inactive-mode measurements in one or more of the methods described herein. Such measurements may be logged by mobile transceivers, for example, mobile transceivers in idle mode and in active mode, and a large number of potential mobile transceiver candidates may be made available. These data may then allow to evaluate to what extend coverage issues, such as bad SINR conditions or coverage holes, for example at indoor locations, can be resolved by a small cell or any other additional cell located at the dummy cell position. Embodiments may also enable a selection of the best one out of a set of candidate locations.

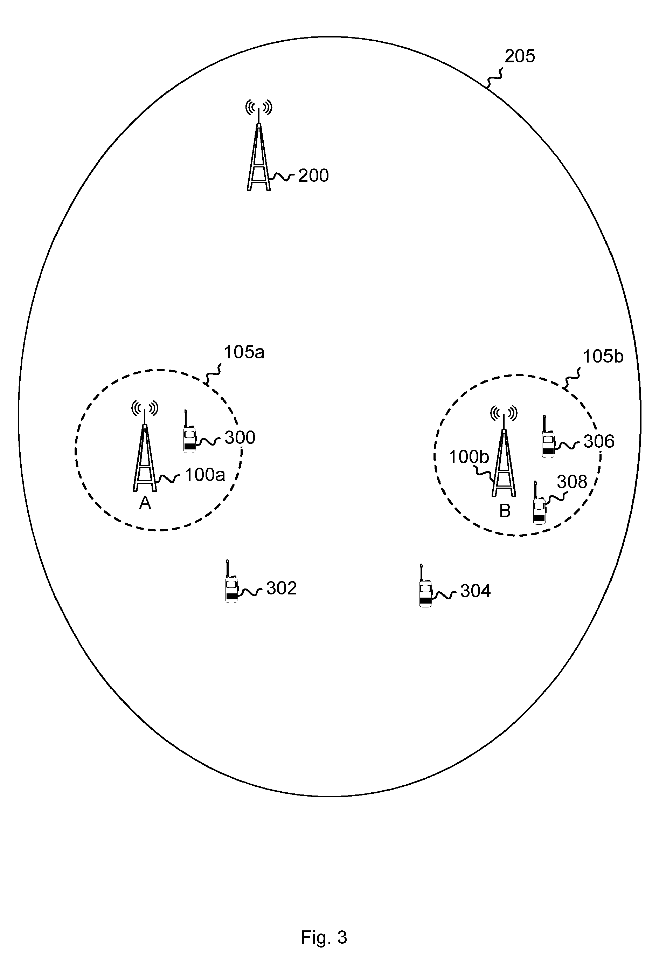

In some embodiments the one or more candidate locations or the plurality of differing places may be at least partly surrounded by a coverage region of a macro cell base station transceiver. Fig. 3 illustrates such a scenario. Fig. 3 shows a macro base station transceiver 200 generating a coverage area 205. Fig. 3 further illustrates a dummy base station transceiver 100, to which it is referred to as 100a in position A and 100b in position B. At position A the dummy base station transceiver 100a generates a coverage area 105a. At position B the dummy base station transceiver 100b generates coverage area 105b. As can be seen from Fig. 3 base station transceiver 200 is assumed to generate a macro cell with coverage area 205 and the dummy base station transceiver 100a, 100b generates a small cell within the coverage 205 of the macro cell base station transceiver 200. Fig. 3 further illustrates a plurality of mobile transceivers 300, 302, 304, 306, 308, etc. The mobile transceivers 300-308 shown in Fig. 3 represent a larger number of mobile transceivers, which could be expected in a real network scenario, e.g. 100 mobile transceivers or more. It is further assumed that within the coverage area 205 of the macro base station transceiver 200 there are two promising locations for the dummy base station transceiver 100 A and B. It is further assumed that the dummy base station transceiver 100 is at first placed at position A and then at position B.

The plurality of mobile transceivers 300-308 in the coverage region 205 of the macro cell base station transceiver 200 are configured with measurement information. For example, the plurality of mobile transceivers 300-308 is configured with MDT measurements. Such measurements are hence carried out during a first phase, during which the dummy base station transceiver 100 is activated at location A, and such measurements are carried out during a second phase, during which the dummy base station transceiver 100 is activated at position B.

After the measurements have been carried out, and hence after information related to the measurement results and information related to the locations where these measurement results have been measured, have been stored in the mobile transceivers, the results can be retrieved or obtained by signaling an according instruction to the mobile transceivers. In an example of an LTE network, such signaling may be carried out by means of RRC signaling.

The dummy base station 100 is placed in an operator network, which could possibly correspond to a mixed-vendor deployment, i.e. the macro cell base station transceiver 200 may be from a different vendor than the potential small cell. In other embodiments there may be a multi-operator scenario, in which the macro cell base station transceiver 200 is operated by a different operator than the dummy base station 100 or a potential small cell base station. In the embodiment depicted in Fig. 3 a potential of a specific small cell placement at locations A and B is evaluated. It is assumed that the dummy base station 100 is basically only transmitting its cell IDentification (cell-ID) and pilot signals. In some embodiments the dummy base station 100 may also transmit information to enable the mobile transceivers to receive the cell-ID, such as e.g. synchronization information or synchronization channels. In the present embodiment the dummy base station 100 does not use any backhaul connection. In other words, the dummy base station transceiver 100 does not need any backbone or signaling connections to the infrastructure of the network. Optionally it may also be battery powered it may hence not need any cable at all.

In the embodiment illustrated in Fig. 3 the method determines the information related to the performance of the base station transceiver 100 at the plurality of differing places A and B based on analyzing the measurement results with respect to a signal quality provided by the base station transceiver 100 at the plurality of differing places A and B. Additionally the number of mobile transceivers 300-308, which is statistically located in coverage areas 105a and 105b of the base station transceiver 100 at the plurality of differing places A and B is taken into account for determining the information related to the performance of the base station transceiver 100 at the plurality of differing places A and B. The coverage area 105a, 105b of the base station transceiver 100 corresponds to an area in which radio signals transmitted by the base station transceiver are receivable at a mobile transceiver 300-308 at least with a predefined signal quality.

In other words, the mobile transceivers 300-308, as they move around through the coverage area 205 of the macro cell 200 may take measurements on the radio signals transmitted by the dummy base station transceiver 100, first when it is located at location A and later when it is located at location B. Such signal quality measurements on the radio signals transmitted by the base station transceiver 100 may, for example, correspond to one or more elements of the group of a SNR, SINR, RSCP, or RSSI, etc. measurements. Information on these measurements is stored together with related location information on the respective measurements. Such information is then stored in the above described measurement data.

The location information may allow identifying where the measurements were obtained. In some embodiments such location information may correspond to information related to an identification of a cell of the communication system the mobile transceiver has been associated with. For example, the identification may identify a cell the mobile transceiver was associated with when the measurement was taken, the last cell the mobile transceiver was associated with in case the measurement was taken in a coverage hole or in a fingerprint of measurable neighbor cells, respectively. In the embodiment depicted in Fig. 3 such identification may, for example, correspond to the identification of the macro cell 200. When the according measurement data is analyzed at a later point in time, having the macro cell identification as location information in these measurement data, may allow identifying a number of mobile transceivers per time unit, which were able to receive the signals of the dummy base station transceiver 100, while being in the coverage area of the macro base station transceiver 200 at the same time. In some embodiments the location may be at the border area of a coverage area of a cell. The cell identification as location information may then provide information on from which side a border small cell base station transceiver has been approached.

In further embodiments the location information may correspond to geographic coordinates. For example, in some embodiments the mobile transceiver may operate a location or positioning module, such as a Global Positioning System (GPS) receiver. Information on the GPS-coordinates may then be provided as location information. In further embodiments other location information may be based on triangulation of base station transceiver locations together with respective signal qualities received from these base station transceivers. Generally, any location information may be used in embodiments that can serve to determine how the dummy base station transceiver 100 has influenced mobile transceivers in the coverage area of the macro base station transceiver 200.

In some embodiments the method hence comprises measuring radio signals of the base station transceiver 100 at the mobile transceiver 300-308 based on the measurement information. In some embodiments the method may further comprise storing an indication in the measurement data when a signal quality of the radio signals of the base station transceiver 100 undergoes a quality threshold at the location. In other words, within the measurement results or the measurement data an indication may be stored, that indicates that a certain signal quality was not measurable at this location. Such information may serve to detect coverage holes in some embodiments. Such signal measurements may as well be based on one or more corresponding elements of the group of SNR, SINR, RSCP, RSSI, etc. -thresholds.

The mobile transceivers 300-308 as depicted in Fig. 3 may be in an active or an inactive state. As mentioned above, the measurement information may indicate to carry out measurements in an inactive state of a mobile transceiver 300-308. The inactive state may correspond to a state in which no payload data transmission is carried out in the respective network. It is to be noted that a mobile device may comprise more than one transceiver and may be in an active state with respect to another mobile network, another frequency, another access technology, etc. In an example of an LTE or an UMTS network, UTRAN or eUTRAN, such an inactive state may correspond to an idle mode of a mobile transceiver. In embodiments, the measurement information may indicate to carry out measurements in an active state of the mobile transceiver 300-308. The active state may correspond to a state in which payload data transmission is carried out with the mobile transceiver. In an example of an LTE or UMTS network, the active state may correspond to an RRC-connected state, such as cell_DCH and cell_FACH, as defined by the corresponding 3GPP-specifications. In general the inactive mode may correspond to a mode in which the mobile is in a standby state. Hence, a mobile transceiver may be registered in the network, and the network may trace the mobile to a certain extent, for example on a cell level, but the mobile may not have an active connection to the network or exchange any payload data with the network. An active mode may be defined by the mobile transceiver being associated with a certain cell and the by the mobile transceiver exchanging payload data with the cell.

A cell is operated by a base station transceiver and can be seen as a coverage area, which can be identified through reference or broadcast channels with a respective identification, as, for example, a pilot channel. Before a mobile transceiver can transmit payload data to a cell, it has to register, associate or connect with a cell. RRC specifies multiple procedures for radio resource management of a mobile transceiver, as handover signaling, measurement configuration, cell reselection, reconfiguration, etc. Once a mobile transceiver has established an RRC connection to the respective network entity, e. g. a Transmission Point, a NodeB, a Radio Network Controller (RNC), an eNodeB, etc., the network entity can trigger the respective procedures, which is why an associated mobile transceiver is also be referred to as in RRC connected mode when associated to a cell. If no RRC context is established the mobile transceiver is also referred to as being in RRC idle mode. In embodiments RRC idle mode mobile transceivers may be configured to carry out the respective measurements.

In the embodiment depicted in Fig. 3 the mobile terminals 300-308 may at least be partly in idle mode and may detect the dummy base station 100a or 100b within the coverage area 205 of the macro cell base station transceiver 200. The mobile transceivers 300-308 may log or store the measured information, for example, MDT-functionality may be used. The idle mode logging report information may then be sent from the mobile transceiver 300-308 towards the operator's network at request, to which it is referred to as signaling instructional information above. In some embodiments an RRC context (transfer to RRC connected mode) may be established before transfer of the information on the measurement data.

The idle mode logging and reporting can be configured by using MDT-functionality, for example, in an UTRAN or a eUTRAN more details on MDT may be found in 3GGP-specifications 37.320 and 32.422. The idle mode logging information may then be retrieved on network request using vendor-independent RRC-signaling and delivered to a core network node, to which it may be referred to as a trace collection entity. All the logged information may then become available for analysis. The selection of UEs or mobile transceivers for logging can be area information based, for example, in terms of one or a list of cells to be measured.

Embodiments may therefore be independent of from which vendor the wireless access network was manufactured and from according element managers in the network. The received idle mode logging information may then be analyzed, e. g. via comparing the logging reports with and without active dummy station 100a, 100b. The influence and benefit of a new cell at this specific candidate location A, B, may then be evaluated using the dummy base station 100a, 100b, for example by statistical analysis. This may -among other applications- be used to decide on the best location for placing, for example a small cell, into an existing macro cell, for example for solving performance issues.

Embodiments may enable to obtain information for such an analysis independently from the vendor of the access network nodes. In order to avoid handovers to the dummy base station 100, the base station 100 may be blacklisted for handovers or, alternatively, if a handover request should be generated, then the network may directly reject it or may simply let it fail via time outs by not reacting at all. Embodiments may save costs and allow efficient determination/evaluation of the best or at least a promising location for a new base station transceiver, such as a small cell base station transceiver, in order to resolve coverage issues.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, network node, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for transmitting", etc., may be provided through the use of dedicated hardware, such as "a transmitter", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. A method for determining information related to a performance of a base station transceiver (100) at a plurality of differing places in a communication network, the method comprising
activating (10) the base station transceiver (100) at the plurality of differing places;
configuring (12) a mobile transceiver (300-308) with measurement information, the measurement information indicating to measure radio signals of the base station transceiver (100) and to store measurement data, the measurement data comprising information related to measurement results and location information related to where the measurement results were obtained;
signaling (14) to the mobile transceiver (300-308) instructional information, the instructional information indicating to provide information related to the measurement data;
receiving (16) information related to the measurement data from the mobile transceiver (300-308); and
determining (18) the information related to the performance of the base station transceiver (100) at the plurality of differing places based on the information related to the measurement data.

2. The method of claim 1, wherein the base station transceiver (100) corresponds to a dummy base station inoperable to transmit payload data.

3. The method of claim 1, further comprising transmitting information related to identification of a cell generated by the base station transceiver (100) from the base station transceiver (100).

4. The method of claim 1 further comprising transmitting a reference signal from the base station transceiver (100).

5. The method of claim 1, wherein the communication network comprises a macro cell base station transceiver and wherein the base station transceiver (100) corresponds to a small cell base station transceiver.

6. The method of claim 5, wherein the plurality of differing places is at least partly surrounded by a coverage region of the macro cell base station transceiver.

7. The method of claim 5, comprising configuring a plurality of mobile transceivers (300-308) in the coverage region of the macro cell base station transceiver with measurement information.

8. The method of claim 7, comprising determining the information related to the performance of the base station transceiver (100) at the plurality of differing places based on analyzing the measurement results with respect to a signal quality provided by the base station transceiver (100) at the plurality of differing places and a number of mobile transceivers (300-308) statistically located in coverage areas of the base station transceiver (100) at the plurality of differing places, the coverage area of the base station transceiver (100) corresponding to an area in which radio signals transmitted by the base station transceiver (100) are receivable at a mobile transceiver at least with a predefined signal quality.

9. The method of claim 1, wherein the measurement information indicates to carry out measurements in an inactive state of the mobile transceiver (300-308), the inactive state being a state in which no payload data transmission is carried out, or wherein the measurement information indicates to carry out measurements in an active state of the mobile transceiver (300-308), the active state being a state in which payload data transmission is carried out with the mobile transceiver (300-308).

10. The method of claim 1, wherein the location information corresponds to information related to an identification of a cell of the communication system the mobile transceiver (300-308) has been associated with, or wherein the location information corresponds to information related to geographic coordinates.

11. The method of claim 1, further comprising measuring radio signals of the base station transceiver (100) at the mobile transceiver (300-308) based on the measurement information.

12. The method of claim 11, further comprising storing an indication in the measurement data when a signal quality of the radio signals of the base station transceiver (100) undergoes a quality threshold at a location.

13. A method for determining information related to a performance of a dummy base station transceiver (100) in a communication network, the dummy base station transceiver (100) being inoperable to transmit payload data, the method comprising
configuring (22) a mobile transceiver (300-308) with measurement information, the measurement information indicating to measure radio signals of the dummy base station transceiver (100) and to store measurement data, the measurement data comprising information related to measurement results and location information related to where the measurement results were obtained;
receiving (24) information related to the measurement data from the mobile transceiver (300-308); and
determining (26) the information related to the performance of the dummy base station transceiver (100) based on the information related to the measurement data.

14. The method of claim 13, further comprising activating the dummy base station transceiver (100) at a plurality of differing places, signaling to the mobile transceiver (300-308) instructional information, the instructional information indicating to provide information related to the measurement data, and determining the information related to the performance of the dummy base station transceiver (100) at the plurality of differing places based on the information related to the measurement data.

15. A computer program having a program code for performing at least one of the methods of claims 1 to 14, when the computer program is executed on a computer or processor.

## Amended claims

### Amended claims in accordance with Rule 137(2) EPC.

1. A method for determining information related to a performance of a base station transceiver (100) at a plurality of differing places in a communication network, the method comprising
activating (10) the base station transceiver (100) at the plurality of differing places;
configuring (12) a mobile transceiver (300-308) of the communication network with measurement information, the measurement information indicating to measure radio signals of the base station transceiver (100) and to store measurement data, the measurement data comprising information related to measurement results and location information related to where the measurement results were obtained;
signaling (14) to the mobile transceiver (300-308) instructional information, the instructional information indicating to provide information related to the measurement data;
receiving (16) information related to the measurement data from the mobile transceiver (300-308); and
determining (18) the information related to the performance of the base station transceiver (100) at the plurality of differing places based on the information related to the measurement data.

2. The method of claim 1, wherein the base station transceiver (100) corresponds to a dummy base station inoperable to transmit payload data.

3. The method of claim 1, further comprising transmitting information related to identification of a cell generated by the base station transceiver (100) from the base station transceiver (100).

4. The method of claim 1 further comprising transmitting a reference signal from the base station transceiver (100).

5. The method of claim 1, wherein the communication network comprises a macro cell base station transceiver and wherein the base station transceiver (100) corresponds to a small cell base station transceiver.

6. The method of claim 5, wherein the plurality of differing places is at least partly surrounded by a coverage region of the macro cell base station transceiver.

7. The method of claim 5, comprising configuring a plurality of mobile transceivers (300-308) in the coverage region of the macro cell base station transceiver with measurement information.

8. The method of claim 7, comprising determining the information related to the performance of the base station transceiver (100) at the plurality of differing places based on analyzing the measurement results with respect to a signal quality provided by the base station transceiver (100) at the plurality of differing places and a number of mobile transceivers (300-308) statistically located in coverage areas of the base station transceiver (100) at the plurality of differing places, the coverage area of the base station transceiver (100) corresponding to an area in which radio signals transmitted by the base station transceiver (100) are receivable at a mobile transceiver at least with a predefined signal quality.

9. The method of claim 1, wherein the measurement information indicates to carry out measurements in an inactive state of the mobile transceiver (300-308), the inactive state being a state in which no payload data transmission is carried out, or wherein the measurement information indicates to carry out measurements in an active state of the mobile transceiver (300-308), the active state being a state in which payload data transmission is carried out with the mobile transceiver (300-308).

10. The method of claim 1, wherein the location information corresponds to information related to an identification of a cell of the communication system the mobile transceiver (300-308) has been associated with, or wherein the location information corresponds to information related to geographic coordinates.

11. The method of claim 1, further comprising measuring radio signals of the base station transceiver (100) at the mobile transceiver (300-308) based on the measurement information.

12. The method of claim 11, further comprising storing an indication in the measurement data when a signal quality of the radio signals of the base station transceiver (100) undergoes a quality threshold at a location.

13. A method for determining information related to a performance of a dummy base station transceiver (100) in a communication network, the dummy base station transceiver (100) being inoperable to transmit payload data, the method comprising
configuring (22) a mobile transceiver (300-308) of the communication network with measurement information, the measurement information indicating to measure radio signals of the dummy base station transceiver (100) and to store measurement data, the measurement data comprising information related to measurement results and location information related to where the measurement results were obtained;
receiving (24) information related to the measurement data from the mobile transceiver (300-308); and
determining (26) the information related to the performance of the dummy base station transceiver (100) based on the information related to the measurement data.

14. The method of claim 13, further comprising activating the dummy base station transceiver (100) at a plurality of differing places, signaling to the mobile transceiver (300-308) instructional information, the instructional information indicating to provide information related to the measurement data, and determining the information related to the performance of the dummy base station transceiver (100) at the plurality of differing places based on the information related to the measurement data.

15. A computer program having a program code for performing at least one of the methods of claims 1 to 14, when the computer program is executed on a computer or processor.
